# EUROPEAN PATENT APPLICATION

(11) **EP 4 702 896 A1**
(43) Date of publication of application: **04.03.2026**
(21) Application number: 24796462.0
(22) Date of filing: 12.01.2024
(51) Int. Cl.: A47J 37/06, A47J 27/04, F23D 14/10, F23D 14/22, F23L 7/00

(54) **ROAST COOKING DEVICE**

(30) Priority: 27.04.2023 JP 2023073633
(71) Applicant: Rinnai Corporation, Nagoya-shi, Aichi 454-0802 (JP)
(72) Inventor: HAYASHI Shusaku, Nagoya-shi, Aichi 454-0802 (JP); HAYASHI Tatsuyuki, Toyota-shi, Aichi 471-8571 (JP); TAKAHASHI Kenji, Toyota-shi, Aichi 471-8571 (JP); NAKAJIMA Tetsuya, Toyota-shi, Aichi 471-8571 (JP); KATAOKA Takao, Toyota-shi, Aichi 471-8571 (JP); YAMAGUCHI Hiroyuki, Tokyo 103-0022 (JP)
(74) Representative: Haseltine Lake Kempner LLP
(86) International application number: PCT/JP2024/000617
(87) International publication number: WO 2024/224702

(57) **Abstract**

A grill-cooking apparatus, with which a burner and a food mounting part mounted above the burner are provided, is configured to be cable of further improving a washing-away effect of excessive fat content and salt content. A fuel gas supplied to the burner is hydrogen gas, and a moisture-releasing device having a moisture-releasing part that releases moisture consisting of steam or water vapor below the food mounting part.

## Description

### TECHNICAL FIELD

The invention relates to a grill-cooking apparatus with which a burner and a food mounting part mounted above the burner are provided. More particularly, the invention relates to the grill-cooking apparatus in which a fuel gas supplied to the burner hydrogen gas is hydrogen.

### BACKGOUND ART

Conventionally, there is known the grill-cooking apparatus described in Patent Document No. 1, for example, with which a burner and a food mounting part mounted above the burner are provided. In the grill-cooking apparatus, an air-fuel mixture that is composed by mixing a fuel gas of which a main is hydrocarbon, such as natural gas and LP gas, with air, and of which an air excessive ratio is approximately 1.0 to 1.2, is supplied to the burner, and a flame is formed by combustion of the air-fuel mixture ejected from flame holes of the burner, so that food such as meat or fish is grill-cooked, which is mounted on the food mounting part.

Meanwhile, it is known that hydrogen combustion gas generated by causing hydrogen to combust has greater amount of water vapor than the combustion gas generated by causing hydrogen carbonate to combust has. Therefore, if the fuel gas supplied to the burner is the hydrogen gas, the hydrogen gas ejected from the flame holes of the burner is caused to diffuse and combust, and the hydrogen combustion gas thus generated is caused to come into contact with the food, it will be possible to wash away fat content and salt content contained in the food with moisture contained in the hydrogen combustion gas. Then, due to recently-growing health consciousness, there is also a requirement to further improve a washing-away effect of the excessive fat content and salt content.

### PRIOR ART

### PATENT DOCUMENT

Patent Document No.1: JP1994-229519 A

### SUMMARY OF INVENTION

### PROBLEM THAT THE INVENTION IS TO BE SOLVED

The invention has been made in view of the above-mentioned point and has a problem of providing a grill-cooking apparatus that is cable of further improving the washing-away effect of the excessive fat content and salt content.

### MEANS FOR SOLVING THE PROBLEM

In order to solve the above-mentioned problem, the invention provides a grill-cooking apparatus GR₁, GR₂, comprising: a burner 4; and a food mounting part 2 provided above the burner, wherein a fuel gas supplied to the burner is hydrogen gas, characterized in that: the grill-cooking apparatus, further comprising: a moisture-releasing device 6, 60 having a moisture-releasing part that releases moisture consisting of steam or water vapor below the food mounting part.

Here, as the above-mentioned conventional example, in a case where the fuel gas of which a main is hydrocarbon and the flame is formed by the combustion of the air-fuel mixture ejected from the flame holes of the burner, when the water vapor comes into contact with the flame, due to high specific heat of the water vapor, a temperature of the flame is lowered to occur poor combustion, which causes a fire to go out in a case. On the other hand, hydrogen gas has a characteristic in which combustion speed thereof is fast and it is difficult to become poor combustion. After the inventors of the application have attracted this and efforted and studied strenuously, the following finding was obtained. If a flame by combusting hydrogen comes into contact with moisture consisting of at least one of steam and water vapor, combustion stability is high. Based on such a finding, in the invention, the fuel gas supplied to the burner is hydrogen, and a configuration in which the moisture-releasing part of the moisture-releasing device is provided, which releases moisture consisting of steam or water vapor below the food mounting part, is adopted, so that poor combustion due to an influence of the moisture released from the moisture-releasing part does not occur.

According to the invention, a washing-away effect of excessive fat and salt components can be improved by adding a washing-away effect of the fat component and the salt component due to contact of the moisture with the food to a washing-away effect of the fat component and the salt component due to contact of the hydrogen combustion gas with the food. In addition, during cooking, a carbonization speed of the food can be lowered by a state in which the moisture is always supplied to the food. These cause a cooked state of the food to be cable of adjusting further delicately when grill-cooking. Furthermore, since a carbide produced from the food is also decreased, the amount of the carbide adhering to the food mounting part is also decreased, reducing frequency and burden of cleaning.

In the invention, a configuration can be adopted, in which the moisture-releasing part is disposed below the burner, and a guide-flow plate 7 for guiding the moisture released from the moisture-releasing part to the flame formed by combusting the hydrogen gas ejected from the flame holes 41 of the burner. According to this, the moisture is heated by the flame. Then, the moisture is difficult to penetrate into the food by heating the moisture, and the washing-away effect of excessive fat and salt components can be further improved.

In addition, in the invention, provided that two horizontally orthogonal directions are defined as an X-axis direction and a Y-axis direction, respectively, when the burner is the pipe-shaped one which consists of a plurality of straight-pipe parts 4a each of which is longitudinal in the X-axis direction and is spaced apart in the Y-axis direction and on which a plurality of flame holes are aligned, the following configuration may be adopted. That is, the moisture-releasing part is disposed so as to be located on a surface on which a gap between adjacent straight-pipe parts in the Y-axis direction is projected downward, and the guide-flow plate 7 has a first guide flow-plate part 71 extending in perpendicular direction on both sides of the pipe-shaped burner in the Y-axis direction and a second guide-flow plate part 72 disposed apart above the moisture-releasing part. This causes the moisture released from the moisture-releasing part to collide with a lower surface of the second guide-plate part and to diffuse and causes the diffused moisture to guide along the first guide-plate part, thereby definitely supplying the moisture to the flame. Furthermore, at the time of cooking, oil or the like generated from the food can be prevented from adhering to the moisture-releasing part, which is advantageous. On the other hand, a configuration may also be adopted, in which the moisture-releasing part is disposed just below the straight-pipe part, and the guide-flow plate has a first guide-flow plate part extending in the perpendicular direction on both sides of the pipe-shaped burner, respectively. According to this, the oil or the like generated from the food can be prevented from adhering to the moisture-releasing part without adding any part.

Furthermore, in the invention, it may be configured such that a case 13 containing a portion of the burner, which is located below the food mounting part, is provided, and the moisture-releasing part is configured to be capable of storing water, and the moisture-releasing part is connected to at least one of the case and the food mounting part, which is configured such that stored water in the moisture-releasing part is heated by heat transfer from one of the case and the food mounting part. This allows waste heat generated by combustion in the burner to be used effectively and the moisture to be and supplied to the flame.

### BRIEF DESCRIRTION OF THE DRAWINGS

FIG. 1 is a perspective view of a grill-cooking apparatus of an embodiment of the invention.
FIG. 2 is a cross-section along a II-II line of FIG. 1.
FIG. 3 is a cross-section along a III-III line.
FIG. 4 is a cross-section of a grill-cooking apparatus of another embodiment, depending on FIG. 3.

### MODES FOR CARRYING OUT THE INVENTION

With reference to the figures, description will be made of an embodiment of a grill-cooking apparatus GR₁ by way of an example in which a burner is the pipe-shaped one and a guide-flow plate for guiding moisture consisting of at least one of steam and water vapor to a flame formed by combustion of hydrogen gas ejected from flame holes of the burner. It should be noted that" hydrogen" referred to in the invention is not limited to pure hydrogen, but includes cases, for example, hydrogen gas is contained in a proportion of 40 % or more, and a small amount of odorant is added to hydrogen gas.

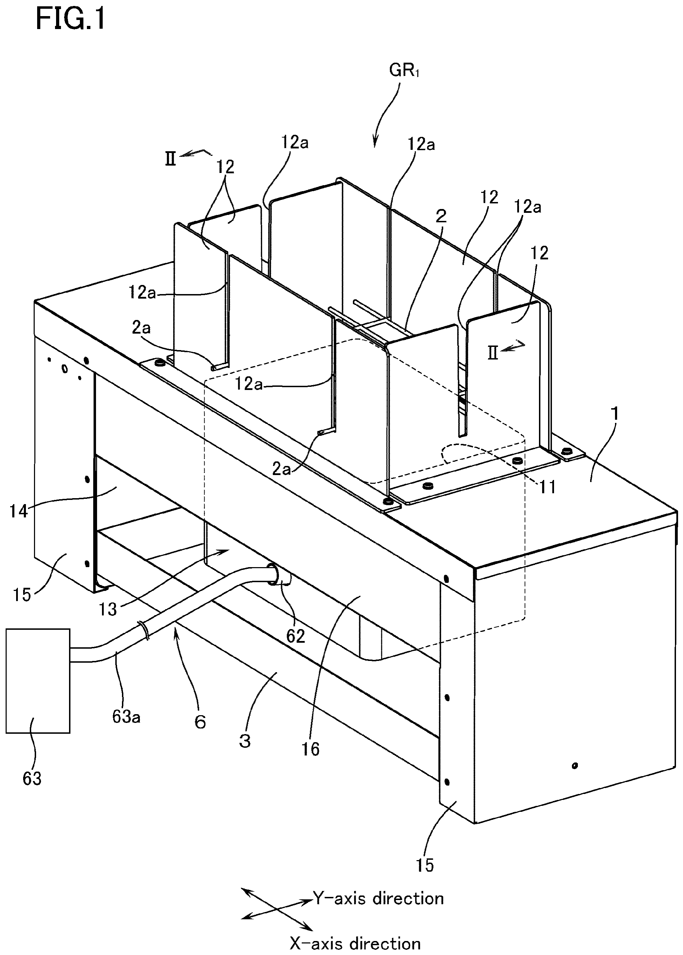

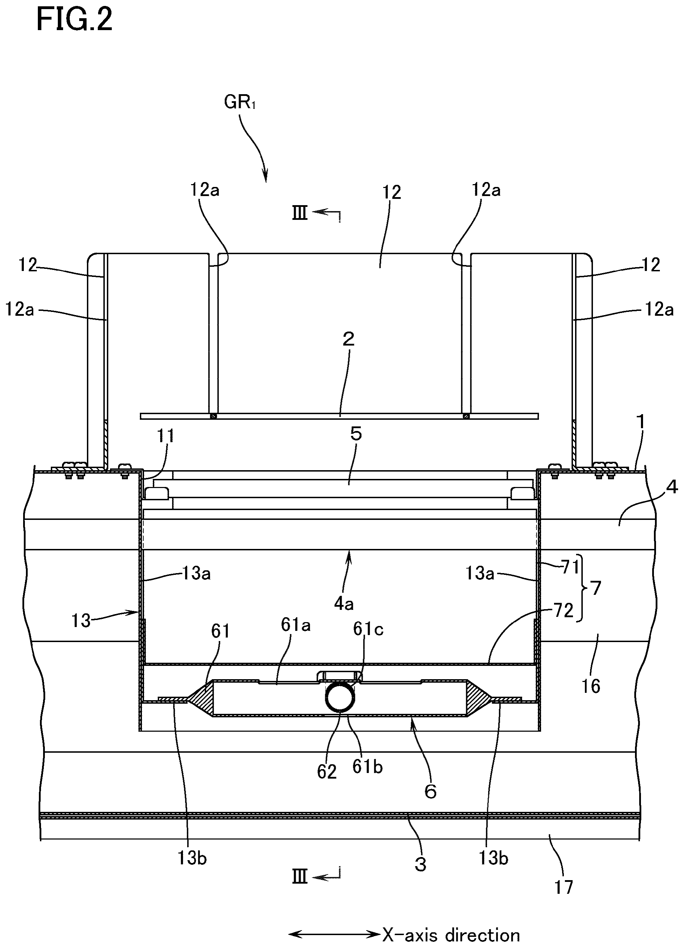

With reference to FIGS. 1 to 3, provided that two horizontally orthogonal directions are defined as an X-axis direction and a Y-axis direction, respectively, in the grill-cooking apparatus GR₁ has a top plate that is longitudinal in the X-axis direction and has a rectangular shape when viewed in a plane. An opening 11 that is longitudinal in the X-axis direction and has a rectangular shape when viewed in a plane is formed in a central part of the top plate 1. Four hood plates 12 are provided and stand in a manner to surround the opening 11 at an upper surface of the top plate 1 so that excessive secondary air is not supplied to a belowdescribed burner 4 from above the burner 4. A plurality of slits 12a extending downward from an upper end are formed in each of the hood plates 12. Then, a gridiron 2 as a food mounting part is located above the opening 11 and is mounted. A supporting rod part 2a is provided on and protrudes from the gridiron 2, which is to be inserted into the slits 12a of the hood plates 12 on both sides in the Y-axis direction. The gridiron 2 is supported at a lower end of the slits 12a through the supporting rod part 2a and is freely taken out upward by leading to the slits 12a.

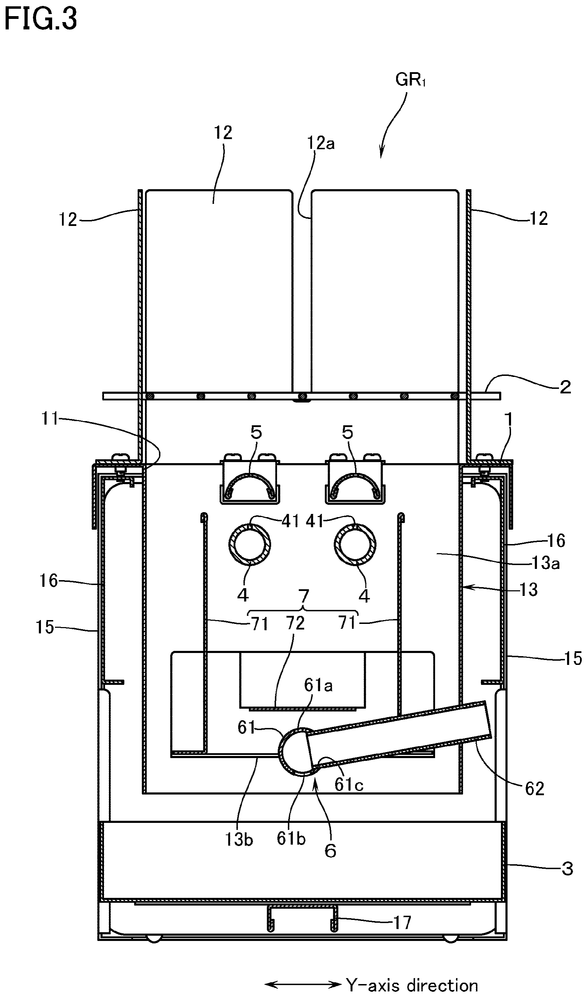

A case 13 extending downward from an inner-edge part of the opening 11 and opened in a lower surface thereof is suspended from the top plate 1. The case 13 incudes a portion of a straight-pipe part 4a, which is located below the gridiron 2 of the burner 4. A pair of supporting plates 14 with a heat-insulating property are provided on an-outer-side of side walls 13a, 13a of the case 13, which are located on both sides in the X-direction, respectively. Storage boxes 15, 15 are attached to each of the supporting plates 14, 14, and both sides of the top plate 1 in the X-axis direction are supported by these supporting plates 14 and the storage boxes 15, 15. In one of the storage boxes 15, although not described by specific illustration, known parts necessary to cause the burner 4 to combust, such as a valve unit including a gas cock for hydrogen which is operated by an operation knob (not shown) provided on an outer surface of the storage box 15, an ignitor and a controller are stored, respectively. In addition, between both the supporting plates 14,14, a drip tray 3 is stored on a lower-side spaced apart from a lower end of the case 13, which is freely drawn forward and inserted backward in the Y-axis direction. It should be noted that a mark 16 in FIG. 1 represents a heat-insulating plate mounted so as to bridge between each of the support plates 14, 14, and a mark 17 in FIG. 3 represents a supporting stand of the soup bowl 3. Then, the burner 4 is provided by inserting into a through-hole (not shown) that is formed in each of the side walls 13a, 13a.

The burner 4 is a pipe-shaped one in which two straight-pipe parts 4a, 4a that are longitudinal in the X-axis direction and are arranged in parallel in the Y-axis direction. In a portion of each of the straight-pipe parts 4a, 4a, which is located inside the case 13 and faces the opening 11, a large number of flame holes 41 opened upward are formed and spaced apart in the X-axis direction. Although not described with a specific illustration, a nozzle is fixed to one end of each of the straight-pipe parts 4a, 4a protruding inside one of the storage box 15 through the side wall 13a on one side in the X-axis direction and the supporting plate 14. Hydrogen is supplied to each of the straight-pipe parts 4a, 4a through the nozzle so that the hydrogen ejected from the flame holes 41 is caused to diffuse and combust. Infrared radiation members 5, 5 curved upward in a convex and arcuate shape are supported by the side walls 13a, 13a, respectively, and provided above each of the straight-pipe parts 4a, 4a. Food (not shown) mounted on the gridiron 2 is grill-cooked by infrared radiation from the infrared radiation members 5, 5 when the infrared radiation members 5, 5 are caused to heat in a red-hot state by a flame formed by combustion of the hydrogen ejected from each of the flame holes 41. At that time, a hydrogen combustion gas by combusting the hydrogen gas pours out from below the infrared radiation members 5, 5 and rises. The rising hydrogen combustion gas contributes to heating the food mounted on the gridiron 2 and can wash away a fat component and a salt component by coming into contact with the food.

Here, hydrogen gas has a characteristic that a combustion speed is fast and poor combustion is difficult to become. Therefore, even though the moisture comes into contact with the flame formed by causing the hydrogen to combust. Combustion stability of the flame is high. Then, in the embodiment, a moisture-releasing device 6 releasing the moisture below the gridiron 2 is provided. The moisture-releasing device 6 is provided with a releasing pipe 61 as a moisture-releasing part, which is disposed below the straight-pipe parts 4a, 4a, a connecting pipe 62 connected to the releasing pipe 61, and a humidifier 63 connected to the connecting pipe 62 through a hose 63a. The releasing pipe 61 is disposed so as to be located on a surface on which a gap between each of the straight-pipe parts 4a is projected downward, and both ends in the X-axis direction thereof are supported by the supporting pieces 13b, 13b provided on and protruding from the side walls 13a, 13a. In the releasing pipe 61, a releasing hole 61a that is opened upward and is longitudinal in the X-axis direction, and a drainage hole 61b that are opened downward are also formed, respectively, so that water dew-condensed inside the releasing pipe 61 falls down into the drip tray 3 through the drainage hole 61b. One end of the connecting pipe 62 is inserted into a connecting hole 61c opened in landscape orientation at a central part of the releasing pipe 61 in the X-axis direction, and the other end passes through and protrudes outward from first guide-flow plate parts that are below-mentioned. It should be noted that since an existing humidifier can be used as the humidifier 63, a specific description thereof is omitted here.

A guide-flow plate 7 is disposed inside the case 13, which guides the moisture released from the releasing hole 61a of the releasing pipe 61 to the flame formed by the combustion of the hydrogen. The guide-flow plate 7 has a first guide-flow plate part 71 extending in the perpendicular direction on both sides of each of the straight-pipe parts 4a in the Y-axis direction, and a second guide-flow plate part 72 disposed apart above the releasing pipe 61. Each of the first guide-flow plate parts 71 is formed so that an upper end thereof is located between each of the burners 4, 4 and the corresponding infrared radiation member 5, 5, and a lower end thereof extends until below the releasing hole 61a of the releasing pipe 61 to reach each of the support pieces 13b, 13b. The second flow-plate part 72 has a contour of a rectangular shape when viewed in a plane, both edges thereof in the Y-axis direction are respectively spaced apart from both the first guide flow plate parts 71 by a predetermined distance, and both edges of the second guide-plate parts 72 in the Y-axis direction are fixed to both side walls 13a, 13a, respectively. These allow the moisture released from the releasing hole 61a of the releasing pipe 61 to collide with the lower surface of the second guide-flow plate part 72 and to diffuse. Since the diffusing moisture is guided along the first guide-flow part 71, the moisture can be definitely supplied to the flame. Furthermore, the second guide-flow plate part 72 can prevent oil or the like generated from the food from adhering to the releasing pipe 61.

According to the foregoing grill-cooking apparatus GR₁, since the releasing pipe 61 releasing the moisture is provided below the gridiron 2, during cooking, a washing-away effect of the fat component and the salt component can be further improved by adding a washing-away effect of the fat component and the salt component by contact of the moisture from the releasing pipe 61 with the food and an effect of easy penetration into the food by heating the water vapor by the flame to a washing-away effect of the fat component and the salt component by contact of the hydrogen combustion gas with the food. In addition, a carbonization speed of the food can be reduced by achieving a state in which the food is always supplied with the moisture. This makes it possible to adjust a cooked state of the food more delicately when grill-cooking. Furthermore, the amount of carbides adhering to the gridiron 2 is decreased by the decrease of the carbides produced from the food, and frequency and burden of cleaning can be reduced.

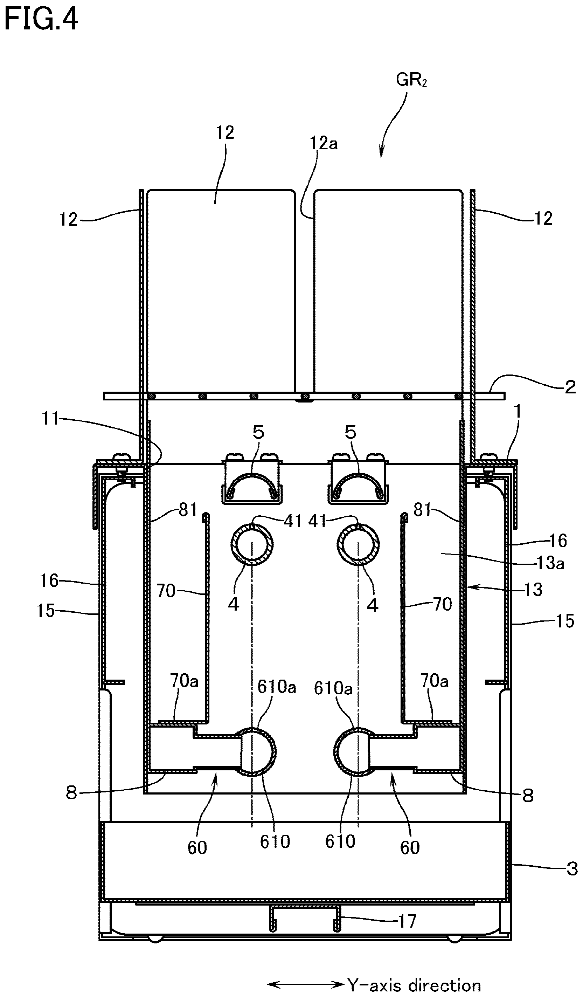

Next, with reference to FIG. 4, description will be made of a grill-cooking apparatus GR₂ of another embodiment. In FIG. 4, the same marks are used for similar members and parts shown in the above-mentioned embodiment. The grill-cooking apparatus GR₂ has a configuration such that waste heat generated by combustion in the burner 4 is effectively used and the moisture can be supplied without using the humidifier 63. Specifically, similar to the above-mentioned embodiment, first guide-flow plates 70 for guiding the moisture to the flame formed by the combustion of hydrogen are provided in the case 13. A flange part 70a bent in the Y-axis direction is formed at a lower end of each of the first guide-flow plates 70, and a heat-transfer body 8, which is configured by being formed a plate made of a metal with good heat-conductivity into an approximately rectangular parallelopiped shape, is joined with the respective flange part 70a.

An outer-side surface of the heat-transfer body 8 in the Y-axis direction is joined with a wall surface of the case 13, and releasing pipes 610, 610 of a moisture-releasing device 60 are connected to an inner-side surface of the heat-transfer body 8 in the Y-axis direction. A heat-receiving plate part 81 extending until above the infrared radiation members 5, 5 is connected to an inner-wall surface of the case 13, thereby increasing a heat-receiving area from the burner 4 is to be increased during the combustion. In addition, two releasing pipes 610, 610 are provided just below a portion of each of the straight-pipe parts 4a, 4a located inside the case 13. In this case, although a releasing hole 610a is formed in each of the releasing pipes 610, 610, different from the above-mentioned embodiment, a releasing hole of moisture is not formed, and water can be stored before cooking. Then, water stored in the releasing pipes 610, 610 can be heated by the heat transfer from the case 13 and the first guide-flow plates 70 during cooking.

According to the foregoing grill-cooking apparatus GR₂, waste heat generated by the combustion in the burner 4 is effectively used and the moisture can be supplied to the flame. In addition, since each of the releasing pipes 610, 610 is located just below the portion of each of the straight-pipe parts 4a, 4a, the oil or the like produced from the food can be prevented from adhering to the releasing pipes 610, 610 without any additional part. It should be noted that since the gridiron 2 is also heated during cooking, the releasing pipes 610, 610 may be connected to the gridiron 2 so as to be capable of transferring heat to the gridiron 2.

Descriptions have so far been made of the embodiments of the invention but, as long as the technical concept of the invention is not deviated from, various modifications are possible. In the above-mentioned grill-cooking apparatus GR₁, descriptions have been made based on the example in which the releasing pipe 61 is disposed below the burner 4 and the water vapor is supplied to the releasing pipe 61 by the humidifier 63, as long as the moisture can be released to below the gridiron 2, the invention is not limited thereto. For example, steam generated by a known boiler may be supplied to the releasing pipe 61, and a moisture-releasing part is provided on side walls 13a, 13a of the case 13, which face a space between the burners 4, 4 and the infrared radiation members 5, 5, whereby the moisture may be supplied to the flame from at least one of the X-axis and Y-axis directions.

In addition, in the above-mentioned grill-cooking apparatus GR₁, GR₂, descriptions have been made based on the example in which two independent straight-pipe parts 4a, 4a are used for a burner 4, the invention is not limited thereto. The number of the straight-pipe parts 4a may be three or more, and the invention can be also applied to a burner in which one end of each of the straight-pipe parts 4a, 4a is connected to each other, and to a burner with a circular contour. In addition, although descriptions have been made based on the example in which the gridiron 2 is used for a food mounting part, the food mounting part can be also configured by a metallic plate in which slit holes piercing in perpendicular direction are formed.

### EXPLANATION OF MARKS

- GR₁, GR₂: Grill-cooking apparatus
- 13: Case
- 2: gridiron (Food mounting part)
- 4: Burner
- 4a: Straight-pipe part
- 41: Flame holes
- 6, 60: Moisture-releasing device
- 61, 610: Releasing pipe (Moisture-releasing part)
- 7: Guide-flow plate
- 71: First guide-flow plate parts
- 72: Second guide-flow plate part

## Claims

1. A grill-cooking apparatus (GR₁, GR₂2. , comprising:
a burner (4); and
a food mounting part (2) mounted above the burner,
wherein a fuel gas supplied to the burner is hydrogen gas,
**characterized in that**:
the grill-cooking apparatus, further comprising:
a moisture-releasing device (6, 60) having a moisture-releasing part that releases moisture consisting of steam or water vapor below the food mounting part.

2. The grill-cooking apparatus as claimed in claim 1, wherein the moisture-releasing part is disposed below the burner, and a guide-flow plate (7) for guiding the moisture released from the moisture-releasing part to the flame formed by combusting the hydrogen gas ejected from the flame holes (41) of the burner.

3. The grill-cooking apparatus as claimed in claim 2, wherein provided that two horizontally orthogonal directions are defined as an X-axis direction and a Y-axis direction, respectively, the burner is the pipe-shaped one which consists of a plurality of straight-pipe parts (4a) each of which is longitudinal in the X-axis direction and is spaced apart in the Y-axis direction and on which a plurality of flame holes are aligned, and
wherein the moisture-releasing part is disposed so as to be located on a surface on which a gap between adjacent straight-pipe parts in the Y-axis direction is projected downward, and
wherein the guide-flow plate (7) has a first guide flow-plate part (71) extending in perpendicular direction on both sides of the pipe-shaped burner in the Y-axis direction and a second guide-flow plate part (72) covering an upper-side of the moisture-releasing part.

4. The grill-cooking apparatus as claimed in claim 2, wherein provided that two horizontally orthogonal directions are defined as an X-axis direction and a Y-axis direction, respectively, the burner is the pipe-shaped one which consists of a plurality of straight-pipe parts (4a) each of which is longitudinal in the X-axis direction and is spaced apart in the Y-axis direction and on which a plurality of flame holes are aligned, and
wherein the moisture-releasing part is disposed just below the straight-pipe part, and
wherein the guide-flow plate has a first guide-flow plate part (71) extending in the perpendicular direction on both sides of the pipe-shaped burner, respectively.

5. The grill-cooking apparatus as claimed in claims 1 to 4, further comprising:
a case (13) containing a portion of the burner, the case being located below the food mounting part,
wherein the moisture-releasing part (610) is configured to be capable of storing water, and the moisture-releasing part is connected to at least one of the case and the food mounting part, which is configured such that stored water in the moisture-releasing part is heated by heat transfer from one of the case and the food mounting part.
